# EUROPEAN PATENT SPECIFICATION

(11) **EP 4 202 260 B1**
(45) Date of publication and mention of the grant of the patent: **12.02.2025**
(21) Application number: 22214401.6
(22) Date of filing: 16.12.2022
(51) Int. Cl.: F16H 48/22, B60K 6/20, F16H 57/037, H02K 7/116, B60K 6/52, B60K 1/02, B60K 6/48, B60K 17/28, F16H 3/089, F16H 48/08, F16H 3/08

(54) **IMPROVED HYBRID DRIVING FRONT AXLE FOR AN AGRICULTURAL VEHICLE**
VERBESSERTE HYBRID-FAHRVORDERACHSE FÜR EIN LANDWIRTSCHAFTLICHES FAHRZEUG
ESSIEU AVANT MOTEUR HYBRIDE AMÉLIORÉ POUR VÉHICULE AGRICOLE

(30) Priority: 21.12.2021 IT 202100032063
(43) Date of publication of application: 28.06.2023
(73) Proprietor: CNH Industrial Italia S.p.A., 10156 Torino (IT)
(72) Inventor: ZANASI, Nicholas, 41013 Modena (IT); BORGHI, Alberto, 42033 Carpineti (IT); INVERSANI, Alessio, 41030 Cavezzo (Modena) (IT); FORTE, Michelantonio, 41100 Modena (IT)
(74) Representative: CNH Industrial IP Department

(56) References cited:
- EP-A1- 2 809 540
- EP-B1- 2 809 540
- US-B2- 7 191 859

## Description

### TECHNICAL FIELD

The present invention relates to a driving axle for an agricultural vehicle, in particular a hybrid driving front axle for a tractor.

### BACKGROUND OF THE INVENTION

Reduction of automotive fuel consumption and emissions is an ongoing process that involves more and more vehicles, including agricultural and work vehicles, powered either entirely or in hybrid fashion by electric machines.

In general, hybrid/electrified vehicles differ from conventional internal combustion powered motor vehicles in that they are powered, at least in part, by one or more battery powered electric machines.

Such battery powered electric machines occupy a significant space and may be arranged, if present, far from the internal combustion engine.

However, the re-arrangement of the elements of the axle in the vehicle would mean to update globally the design of the vehicle thereby incurring in high costs.

Moreover, each agricultural vehicle configuration has different power size and therefore each configuration would need a specific reconfiguration of the axle.

An example of a driving axle of the type mentioned above is described in EP2809540 A1, which relates to a front hybrid driving axle for a vehicle provided with a housing which is adapted to be connected, at one end an internal combustion engine and at the other hand to an electric machine and lodges the transmission elements devoted to the transmission of the torque provided by internal combustion engine and electric machine to the ground engaging wheels.

EP 2809540 A1 discloses then a front hybrid driving axle comprising: a housing configured to be fixed to an internal combustion engine; an electric machine carried by said housing wherein said housing comprises a front portion and a rear portion, said front portion comprising a front terminal portion and a rear terminal portion configured to be connected together to define a closed space for housing at least one transmission operatively connecting said electric machine and an engine shaft of said internal combustion engine, said front portion further comprising an intermediate portion and rear terminal portions and configured to divide said space in a first portion and a second portion, said intermediate portion being configured to support said at least one transmission within said space, wherein the rear terminal portion of said front portion further defines a first opening configured to allow the passage of an engine shaft and a second opening configured to allow the passage of a connection shaft.

A similar arrangement is disclosed in document US7191859 B2.

Therefore, the need is felt to provide a hybrid axle design whereby one or more electric motors are coupled to a drive axle of a vehicle that are simple and cost-effective.

An aim of the present invention is to satisfy the above mentioned needs in an optimized and cost-effective way.

### SUMMARY OF THE INVENTION

The aforementioned aim is reached by a hybrid driving front axle arrangement as in claim 1 and an agricultural vehicle as in claim 15.

Preferred embodiments of the invention are realized according to the claims dependent on or related to the above independent claim.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective exploded view of an agricultural vehicle provided with a hybrid driving front axle according to the invention;
- Figure 2 is a perspective exploded view of the hybrid front driving axle according to the invention;
- Figure 3 is a rear perspective exploded view of part of the hybrid driving front axle according to the invention with parts removed for sake of clarity;
- Figure 4 is a sectional longitudinal view of a portion of the hybrid front driving axle;
- Figure 5 is schematic representation of the mechanical transmission realized within the hybrid driving front axle according to the invention;
- Figure 6 is a lateral front view of a part of the hybrid driving front axle according to the invention with parts removed for sake of clarity; and
- Figure 7 is a rear plane view of the part of the hybrid driving front axle of figure 5.

### DETAILED DESCRIPTION OF THE INVENTION

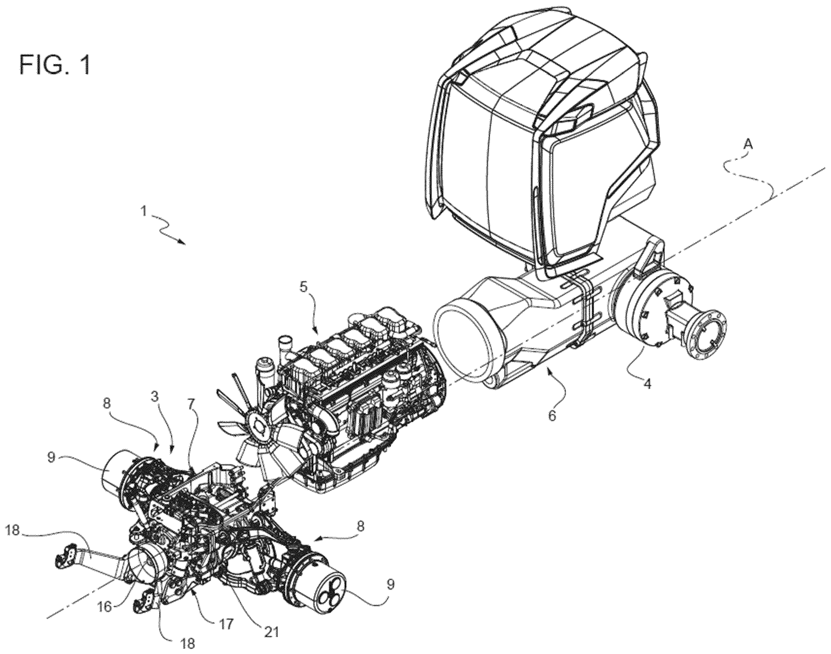

Figure 1 discloses a work vehicle 1 such as a tractor provided with a front axle 3 and a rear axle 4 that are movable with respect to the ground thanks, e.g. to wheels, not shown.

The vehicle 1 is provided with an internal combustion engine 5 and a rear transmission module 6 that is operatively interposed between the internal combustion engine 5 and the rear axle 4.

According to the invention, the front axle 3 is a hybrid driving axle, as described in the following, that is operatively connected to a plurality of electric machines M', M'', to the internal combustion engine 5 and to rear transmission module 6.

In particular, electric machines M', M'' are electrically connected one with the other in order to allow electrical energy transfer between them. The tractor 1 further comprise electrical energy storage means (not shown) and an electric control unit (not shown) electrically connected to electric machines M', M'' to control their operation.

Referring to the accompanying figures, the hybrid axle 3 comprises a housing 7 that is configured to be fixed to the housing of internal combustion engine 5 to house the electric machines M', M'' and to house a mechanical transmission as defined in the following. Furthermore, the housing 7 is configured to be connected to hub wheels 9, preferably via suspension systems 8.

The housing 7 essentially comprises a front portion 7' and a rear portion 7'' configured to be assembled together via fixation means such as threaded elements.

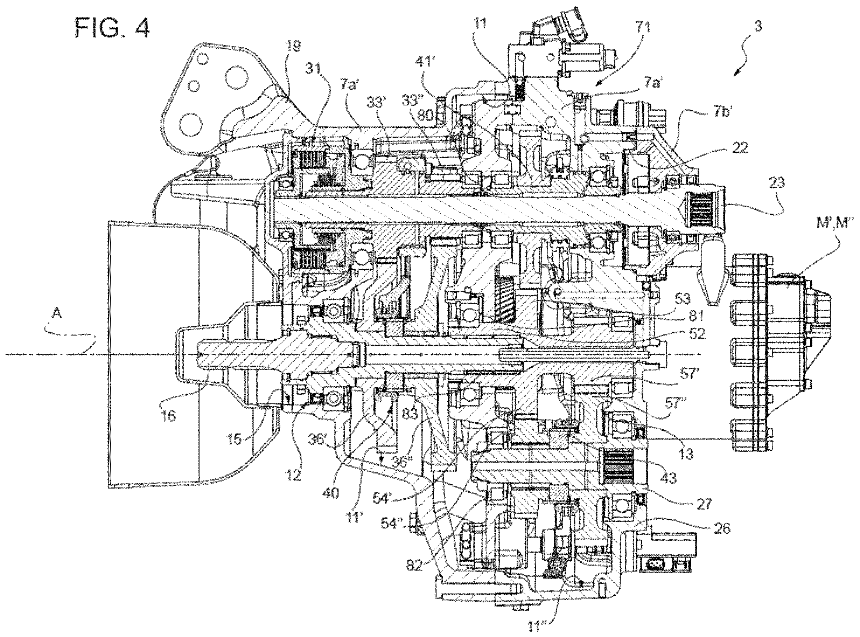

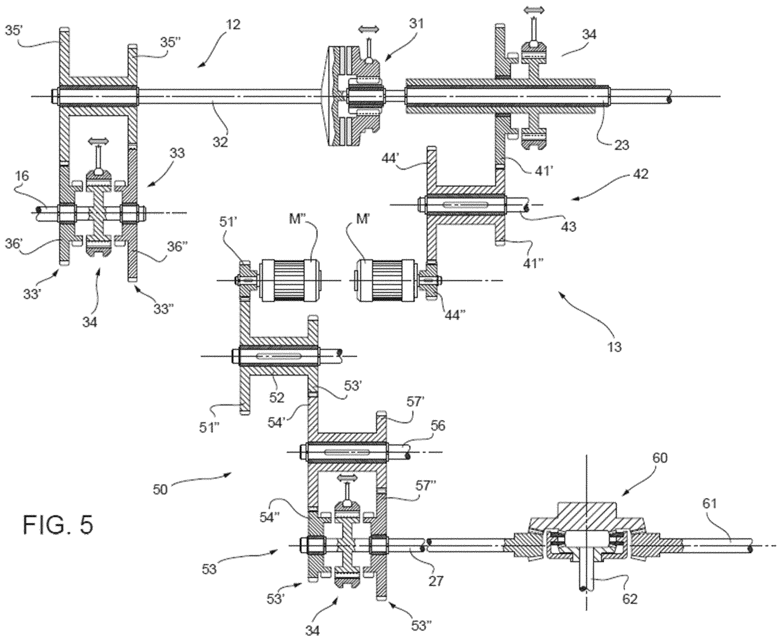

In particular, making reference to figures 4 and 5, the front portion 7' is configured to define a space 11 suitable for housing a power take off, PTO, transmission 12 and an electric path transmission 13 and to define a plurality of fixation points for fixing different operational elements of the vehicle 1 as defined below.

In greater detail, the front portion 7' comprises a front terminal portion 7a' and a rear terminal portion 7b' configured to be assembled together via fixation means, such as traded elements, to define the space 11 housings transmissions 12, 13.

Preferably, the front terminal portion 7a' and a rear terminal portion 7b' comprises an intermediate plate 7c' that is axially comprises along a longitudinal axis A of the vehicle 1 between the front and rear terminal portions 7a', 7b' .

The intermediate plate 7c' divide the space 11 into a front portion 11' voted to house main part of the PTO transmission 12 and a rear portion 11'' voted to house main part of the electric path transmission 13.

It is furthermore notice that the PTO transmission 12 and the electric path transmission 13 are independent one with respect to the other from an operational point of view, therefore the PTO transmission 12 could be removed by the gearings comprised by housing 7 without interfering with the operation of electric path transmission 12.

The front terminal portion 7a' is designed to define at least one among the following features:
- An opening 15 to allow the passage of a PTO shaft 16;
- At least a pair of fixation points 17 for fixing a front hitch system 18, also known as Front Hitch Power Lift; and/or
- At least a fixation point 19 for fixing high voltage connectors 21 such as AEF (agricultural electric foundation) connectors for connecting electric-managed implements.

Furthermore, the front terminal portion 7a' is designed to allow the fixation of a hydraulic actuation assembly 20 configured to control other operational elements of the vehicle.

It can be appreciated that the opening 15 is placed in a front wall and center with respect to the hitch system 18 that comprises preferably at least a pair of lower arms and an upper arm.

The fixation points 19 are preferably realized in an upper wall of the front terminal portion 7a'.

The rear terminal portion 7b' is designed to define:
- An opening 22 to allow the passage of an engine shaft 23;
- At least a pair of seats 24 each provided with an opening 25 each configured to house at least one electric machine M', M'';
- An opening 26 configured to allow the passage of a connection shaft 27 that is operatively connected to one of said electric machines M', M'' as described in the following.

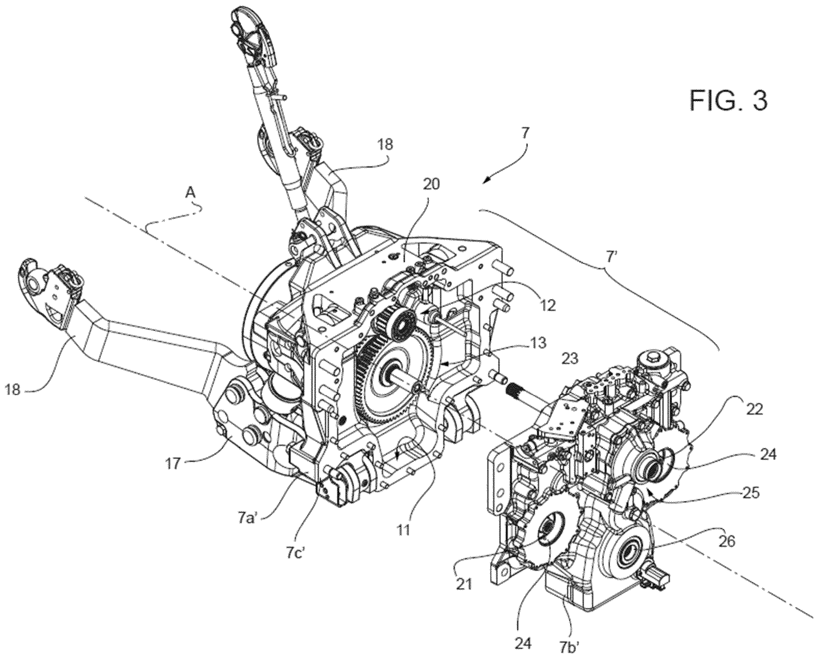

As best shown in figure 3, the openings 22, 26 are substantially collinear to a vertical axis crossing the longitudinal axis A, while the pair of seats 24 are placed on opposite sides with respect to the longitudinal axis A, preferably equally distance with respect to this latter. The seats 24 are furthermore placed in a vertical intermediate position with respect to openings 22, 26.

Figure 5 discloses a schematic representation of the gearings comprised by driving front axle 3 and operatively interposed between the engine shaft 23, the PTO shaft 16 and the connection shaft 27.

As said, the gearings comprises two different transmissions, the PTO transmission 12 and the electric path transmission 13.

The PTO transmission 12 comprises coupling means 31 such as a clutch operatively interposed between the engine shaft 23 and a first intermediate shaft 32. The PTO transmission 12 further comprises a reduction stage 33 operatively interposed between the first intermediate shaft 32 and the output shaft 16; in particular, the reduction stage 33 may comprise two different reduction stages 33', 33'' and selector means 34 configured to select alternatively the reduction stages 33', 33''. Such reduction stages 33', 33'' being configured to vary the torque/speed provided by the engine shaft 23 with two different gear ratios.

In particular, the first reduction stage 33' comprises a first wheel 35' carried, preferably fixedly carried by shaft 32 and a second wheel 35'' preferably carried in a rotatably free manner by PTO shaft 16, while the second reduction stage 33'' comprises a first wheel 36' carried, preferably fixedly carried by shaft 32 and a second wheel 36'' preferably carried in a rotatably free manner by PTO shaft 16.

The electric path transmission 13 preferably comprises a first wheel 41' preferably carried in a movable manner by engine shaft 23 and configured to be selectively fixed to this latter by selection means 34. Such first wheel 41' is configured to be connected to an operative shaft of the first electric machine M, acting as generator, in particular thanks to a reduction stage 42.

The reduction stage 42 preferably comprises a second shaft 43 provided with a first wheel 41'' configured to mesh with the first wheel 41' and a second wheel 44'. Both the first and second wheels 41'' and 44' are preferably carried in a fixed manner by second shaft 43. The second wheel 44' is configured to mesh with a third wheel 44'' carried by the operative shaft of the electric machine M.

The electric path transmission 13 further comprises a reduction stage 50 operatively interposed between the second electric machine M', acting as motor, and the connection shaft 27.

In particular, the reduction module 50 preferably comprises a third shaft 52 that is operatively interposed between the second electric machine M' and the connection shaft 27 and a first wheel 51' carried by the operative shaft of the second electric machine M' and a second wheel 51'' carried by the third shaft 52, preferably in a fixedly manner.

The reduction module 50 further comprises a third wheel 53' that is operatively connected to the connection shaft 27 preferably via a reduction stage 53, in particular the reduction stage 53 may comprise two reduction stages 53', 53'' and selector means 34 configured to select alternatively the reduction stages 53', 53''. Such reduction stages 53', 53'' being configured to vary the torque/speed provided by the gear 51 with two different gear ratios.

In particular, the first reduction stage 53' comprises a first wheel 54' carried, preferably fixedly carried by a first shaft 56 and a second wheel 54'' preferably carried in a rotatably free manner by connection shaft 27, while the second reduction stage 53'' comprises a first wheel 57' carried, preferably fixedly carried by third shaft 56 and a second wheel 57'' preferably carried in a rotatably free manner by connection shaft 27.

The connection shaft 27 is then configured to mesh into a gearing device 60 that is operatively interposed between the connection shaft 27 and a rear transmission shaft 61 coming from the rear transmission module 4. The gearing device 60 is configured to provide an output shaft 62 to provide torque to hub wheels 9.

The above selector means 34 are schematized as dog clutches but may comprise any suitable selection means actuated in a mechanic, pneumatic or hydraulic way.

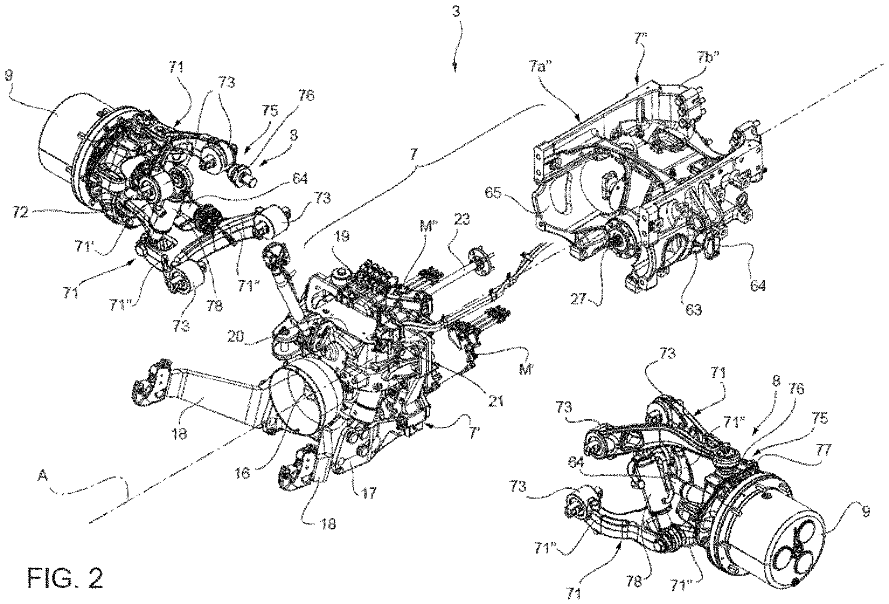

Coming back to the rear portion 7'', as shown in figure 2, it comprises a front terminal portion 7a'' and a rear terminal portion 7b'' that are preferably realized as one piece.

The rear terminal portion 7b'' defines a closed space (not shown) configured to house gearing device 60 and openings 63 configured to allow the passage of output driving shafts 64 configured to be connected to the respective wheel hubs 9 to provide torque to these latter.

The front terminal portion 7a'' defines an open space 65 configured to house a portion of the electric machines M', M''. Accordingly, the space 65 is preferably laterally defined by curved walls that follows the profile of the electric machines M', M".

The space 65 is furthermore configured to house the connection shaft 27 that pass within the rear terminal portion 7b".

Referring back to suspension systems 8, the rear terminal portion 7'' define connection points for fixing the different elements comprised by the suspension systems 8.

In particular, the suspension systems 8 according to the shown embodiment comprise a connection element 71 shaped as a fork, i.e. "Y"-shaped comprising an outer portion 71' connected to the wheel hub and a pair of inner portions 71'' extending longitudinally spaced along axis A with respect to outer portion 71'.

In the described embodiment, the inner portions 71" are in particular curved defining a concave portion towards the housing 7; furthermore, preferably both the inner and outer portions 71'', 71' have a curved shape defining a convex edge towards ground.

The outer portion 71' is connected via a hinge 72 to the wheel hub to allow a rotation of this latter about a vertical axis and the inner portions 71" are connected via a respective hinge 73 to the rear portion 7''. Hinges 73 are configured to allow rotation about an axis parallel to longitudinal axis A.

The shape of the connection element 71 allows the passage of the driving shaft 64 above this latter between the rear portion 7'' and the hub wheels.

The front axle assembly 3 further advantageously comprises steering means 75 interposed between the hub wheel 9 and the rear portion 7" and configured to control steering angle of the respective hub wheel 9.

The steering system 75 according to the present embodiment comprises a steering arm 76 hinged via a hinge 77 to the wheel hub 9 in a position distanced by the rotation axis of hinge 72. Therefore, movement of steering arm 76 cause a rotation of wheel hub 9 about rotation axis of hinge 72.

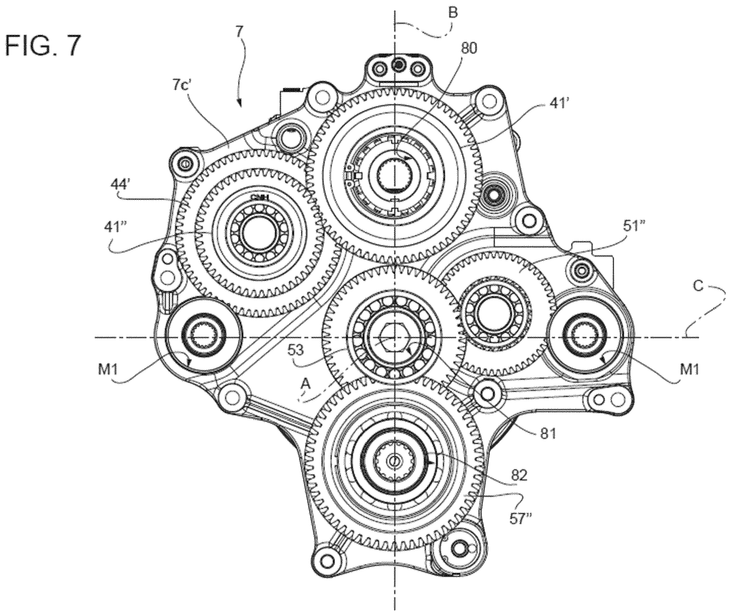

In particular, making reference to figures 4, 5, 6 and 7 it is noticed that the intermediate plate 7c' provide support for both the PTO transmission 12 and the electric path transmission 13.

In detail, the intermediate plate 7c' defines three through openings 80, 81, 82 that extending along a common vertical axis B perpendicular to longitudinal axis A and therefore positioned in a substantially centered position in a transversal direction of the intermediate plate 7c'.

The openings 80, 81, 82 are configured to house, respectively, the shaft 23, 52 and 27. Accordingly, shaft 23, 52 and 57 are placed in parallel with respect to longitudinal axis A and, in detail, the engine shaft 23 is vertically above the shaft 52 that is vertically above the connection shaft 27.

The electric machines M', M'' are positioned along the transversal direction, i.e. along an axis C that is perpendicular to vertical and longitudinal axis A, B and preferably collinear.

In detail, it is noticed that the gearings connected to the first electric machines M' and the gearings connected to the second electric machines M'' are centered in points that belong to two different quadrants when considering the Cartesian plane defined by axis B and C.

As best shown in figure 4, the PTO shaft 16 is collinear with shaft 52. In particular, the PTO shaft 16 is housed, in an inner extremity, in a seat 83 defined by the shaft 52 in a rotatably free manner with respect to this latter.

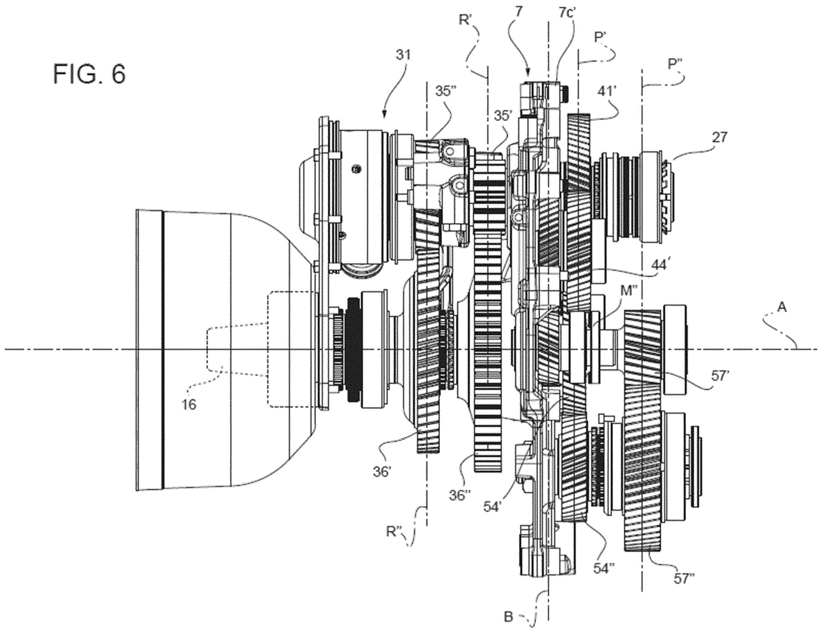

As can be seen in figure 6, the electric path transmission 13 is mainly coplanar to a plane P', i.e. the center of the gears connected to the first and second electric machines are comprise by a plane P'. Since in the present embodiment two reductor modules 53', 53" are present, the gears are disposed along two planes P', P'' one parallel with respect to the other and with respect to the intermediate portion 7c', i.e. perpendicular to longitudinal axis A, and spaced one with respect to the other along longitudinal axis A.

Similarly, the PTO transmission 12 is mainly coplanar to a plane R', i.e. the center of the gears connected to the PTO shaft are comprise by a plane R'. Since in the present embodiment two reductor modules 33', 33'' are present, the gears are disposed along two planes R', R'' one parallel with respect to the other and with respect to the intermediate portion 7c', i.e. perpendicular to longitudinal axis A, and spaced one with respect to the other along longitudinal axis A.

Furthermore, it is noticed that advantageously, planes P', P", R', R" are all parallel one with respect to the other.

Clearly, the hybrid driving front axle 3 further comprises other mechanical elements such as bearings, shoulders, O-rings and other known mechanical elements used for mounting the above mentioned elements and here not described for sake of brevity.

The operation of the hybrid driving front axle 3 according to the invention described above is the following.

Generally, the internal combustion engine 5 carries in rotation the shaft 23 and, on the opposite side and as known, the transmission 4 that provides torque to the rear axle assembly 4 according to the ratio necessity of the vehicle.

On the opposite side when the selector means 34 couple together shafts 23 and 43 the torque passes via gearings 41', 41", 44', 44'' to the first electric machine M'. This latter may therefore work as generator, i.e. receiving mechanical energy and providing electrical energy.

In particular, such electrical energy may be used by the second electric machine M'' (or stored for further use) that provides torque to gear 51'. The torque passes via gearing between gears 51', 51'' and one between the reductor modules 53', 53'' to connection shaft 27. There, the torque passes through the gearing device 60 to the wheel hubs 9 via driving shaft 64 providing a front driving wheel configuration.

If no torque is provided by rear transmission shaft 61, then the hubs 9 will be carried only by torque provided by electric machine M", conversely, a four driving wheel configuration will be provided.

Clearly, if the selector means 34 does not engage engine shaft 23 to the electric path assembly 13, this portion will not carried by thermal engine 2 and, in case, torque provided by rear transmission shaft 61 will pass to hubs 9 providing a standard rear driving wheel configuration.

In case, if one of selection means 34 engage one of reduction stages 53', 53'' to the connection shaft 27 when it is carried by the rear transmission shaft 61, the torque will pass towards gear 51' thereby allowing electric machine M" to act as a generator.

If the PTO transmission 12 is present, then, the PTO shaft 16 operation can be modulated by coupling means 31 that engage shaft 32 with the engine shaft 23. In this way torque will pass from engine shaft 23 towards shaft 32 and then via reduction stages 33', 33'' to PTO shaft 16.

In all the aforementioned operations reduction stages 53', 53", 33', 33'' can be selected via selection means 34 by the user to provide a suitable output speed of the chosen functionality.

In view of the foregoing, the advantages of the front hybrid driving axle according to the invention and vehicle comprising this latter are apparent.

The provided front hybrid driving axle has a very compact and small dimension, thereby allowing the use in substitution of existing standard axles.

Moreover, the proposed housing allows to provide possible fixation points for many different elements of the tractor 1 in a compact and optimized way. Accordingly, the same housing 7 may be used for many different combination of element configuration that may be provided to the user.

Therefore, manufacturing costs are reduced and versatility of the proposed front hybrid driving axle is increased.

Furthermore, electrical elements are housed within a dedicated space in the housing of the front hybrid driving axle thereby protecting this latter from the vehicle environment. Such latter solution is clearly more simple and safe.

It is clear, furthermore, that it is possible to have an independent traction on the front axle with respect to the rear axle or, alternatively, a four driving wheel traction or, further, a standard rear traction, according to the need of the agricultural vehicle.

As demonstrated, according to the capacity of the battery provided in the vehicle, it is possible to move the agricultural vehicle 1 in a full electric configuration.

Furthermore, the presence of the intermediate portion 7c' provides a unified support for the PTO transmission 12 and the electric path transmission 13.

In detail, the intermediate portion 7c' provided two portion of inner space 11 that are closed and delimited and connected by suitable lubrication openings realized through this latter to improve lubrication.

Moreover, the proposed disposition provides at the same time enough space to correctly allow the mounting of the different gears in a way so that both the PTO transmission 12 and the electric path transmission 13 are independent. Furthermore, in the electric path transmission 13, also the gears connected to the first electric machine M' are independently mounted with respect to the gears connected to the second electric machine M'', thereby providing, with the same intermediate portion 7c' support to different possible configurations of the hybrid driving front axle 3.

Furthermore, the gearings are all compacted along longitudinal axis A in one or two planes P', P", R', R" thereby providing a very longitudinal compact assembly. Moreover, the assembly of the different portions of the transmission portions are facilitated and therefore quicker.

It is clear that modifications can be made to the described front hybrid driving axle according to the invention and vehicle comprising this latter which do not extend beyond the scope of protection defined by the claims.

For instance, the disclosed geometries and dimension are variable according to the typology of agricultural vehicle.

Moreover the disclosed gears and gearings may vary according to the necessity of the work vehicle, in particular gear wheels may be of any typology and vary in number. Similarly shaft may be disposed in a different way and vary in their number.

Clearly, it is possible to foresee more than two electric machines and their relative position may vary with respect to the transmission group elements.

Moreover, the actuators shown in the present disclosure may be of any typology other than electro-mechanical, e.g. hydraulic or pneumatic.

## Claims

1. Front hybrid driving axle (3) for an agricultural vehicle (1), said front hybrid driving axle (3) comprising:
a housing (7) configured to be fixed to an internal combustion engine (5) of said agricultural vehicle (1);
a plurality of electric machines (M', M") housed within said housing (7);
wherein said housing (7) comprises a front portion (7') and a rear portion (7") configured to be connected together along a longitudinal axis (A) of said vehicle (1),
said front portion (7') comprising a front terminal portion (7a') and a rear terminal portion (7b') configured to be connected together to define a closed space (11) for housing at least one transmission (12, 13) each comprising a plurality of gears and shafts housed within space (11), said at least one transmission (12, 13) operatively connecting at least one of said plurality of electric machines (M', M") and an engine shaft (23) of said internal combustion engine (5),
said front portion (7) further comprising an intermediate portion (7c') longitudinally interposed between said front and rear terminal portions (7a', 7b') and configured to divide said closed space (11) in a first portion (11') and a second portion (11"),
said intermediate portion (7c') being configured to support said at least one transmission (12, 13) within said closed space (11) );
wherein the rear terminal portion (7b') of said front portion (7') defines:
• a first opening (22) configured to allow the passage of an engine shaft (23) of said internal combustion engine (5),
• a second opening (26) configured to allow the passage of a connection shaft (27) that is operatively connected to one of said plurality of electric machines (M', M"), and
at least a pair of seats (24), which are each provided with an opening (25) each configured to house at least one of said plurality of electric machines (M', M").

2. Front hybrid driving axle according to any of said preceding claims, wherein one of said at least one transmissions (12, 13) is a power take off transmission (12) housed within one of said first and second portions (11', 11") of said closed space (11) and operatively interposed between said internal combustion engine (5) and a power take off shaft (16).

3. Front hybrid driving axle according to any of said preceding claims, wherein said housing (7) is configured to be connected to wheel hubs (9), wherein one of said at least one transmissions (12, 13) is an electric path transmission (13) which is housed within one of said first and second portions (11', 11") of said closed space (11) and is configured to be operatively interposed between said internal combustion engine (5) and said wheel hubs (9).

4. Front hybrid axle according to claims 2 and 3, wherein said power take off transmission (12) is carried by said intermediate portion (7c') independently with respect to said electric path transmission (13).

5. Front hybrid axle according to any of claims 2 to 4, wherein said at least one transmission (12, 13) comprises coupling means (31, 34) for disconnecting said at least one transmission (12, 13) from said engine shaft (23).

6. Front hybrid axle according to any of claims 2 to 5, wherein said at least one transmission (12, 13) comprises at least two reduction stages (33', 33", 53', 53") and coupling means (34) for selecting one between said two reduction stages (33', 33", 53', 53"), said reduction stages (33', 33", 53', 53'') being configured to vary the torque/speed between the respective input and output shafts and having different gear ratios one with respect to the other.

7. Front hybrid axle according to any of claims 3 to 6, wherein said electric patch transmission (13) comprise a first plurality of gears connecting a first electric machine (M') to the engine shaft (23) and a second plurality of gears connecting a second electric machine (M'') to a connection shaft (27), said first and second plurality of gears being independent one with respect to the other.

8. Front hybrid axle according to claim 7, wherein said connection shaft (27) and said engine shaft (23) are collinear along a vertical axis (B) perpendicular to said longitudinal axis (A) and said first and second electric machines (M', M") are collinear to a transversal axis (C) perpendicular to said vertical and longitudinal axis (B, A).

9. Front hybrid axle according to claim 8, wherein the center of each gear of said first and second plurality of gears belong to opposite quadrant in a Cartesian plane realized by said transversal axis (C) and said vertical axis (B).

10. Front hybrid axle according to claim 4 and any of claims 5 to 9 when depending on claim 4, wherein said power take off shaft (16) comprises an inner portion carried in a rotatably free manner in a seat (83) realized in a shaft (52) supporting at least a gear of said electric path transmission (13).

11. Front hybrid axle according to claim 3, wherein the center of the gears of said electric path transmission (13) are contained in at maximum a first plane (P') and a second plane (P"), that are distanced one with respect to the other on said longitudinal axis (A) and perpendicular to this latter.

12. Front hybrid axle according to claim 2 wherein the center of the gears of said PTO transmission (12) are contained in at maximum third plane (R') and a fourth plane(R") that are distanced one with respect to the other on said longitudinal axis (A) and perpendicular to this latter.

13. Front hybrid axle according to claims 11 and 12, wherein said first plane(P'), said second plane (P''), said third plane (R') and said fourth plane (R") are all parallel one to the other.

14. Front hybrid axle according to claim 10, when dependent on claims 8 or 9, wherein said shaft (52) is collinear to said engine shaft (23) and said connection shaft (27), said intermediate portion (7c') defining respective openings (80, 81, 82) configured to house said shaft (52), engine shaft (23) and connection shaft (27).

15. Agricultural vehicle (1) comprising an internal combustion engine (5), a rear transmission (6) carried by such internal combustion engine (5), a rear transmission axle (4) operatively connected to said internal combustion engine (5) and a front hybrid driving axle (3) as claimed in any of the preceding claims operatively connected to said internal combustion engine (5) and said rear transmission (6).

## Patentansprüche

1. Vordere Hybrid-Antriebsachse (3) für ein landwirtschaftliches Fahrzeug (1), wobei die vordere Hybrid-Antriebsachse (3) aufweist:
ein Gehäuse (7), das dazu eingerichtet ist, an einem Verbrennungsmotor (5) des landwirtschaftlichen Fahrzeugs (1) befestigt zu sein;
eine Mehrzahl von elektrischen Maschinen (M', M"), die innerhalb des Gehäuses (7) eingehaust sind;
wobei das Gehäuse (7) einen vorderen Abschnitt (7') und einen hinteren Abschnitt (7") aufweist, die dazu eingerichtet sind, entlang einer Längsachse (A) des Fahrzeugs (1) miteinander verbunden zu sein,
wobei der vordere Abschnitt (7') einen vorderen Endabschnitt (7a') und einen hinteren Endabschnitt (7b') aufweist, die dazu eingerichtet sind, miteinander verbunden zu sein, um einen geschlossenen Raum (11) zum Einhausen von zumindest einem Getriebe (12, 13) zu definieren, von denen jedes eine Mehrzahl von Zahnrädern und Wellen aufweist, die innerhalb des Raums (11) eingehaust sind, wobei das zumindest eine Getriebe (12, 13) zumindest eine der Mehrzahl von elektrischen Maschinen (M', M") und eine Motorwelle (23) des Verbrennungsmotors (5) wirkend miteinander verbindet,
wobei der vordere Abschnitt (7) des Weiteren einen Zwischenabschnitt (7c') aufweist, der in Längsrichtung zwischen dem vorderen und dem hinteren Endabschnitt (7a', 7b') eingefügt ist und der dazu eingerichtet ist, den geschlossenen Raum (11) in einen ersten Abschnitt (11') und einen zweiten Abschnitt (11") zu unterteilen,
wobei der Zwischenabschnitt (7c') dazu eingerichtet ist, das zumindest eine Getriebe (12, 13) innerhalb des geschlossenen Raums (11) zu tragen;
wobei der hintere Endabschnitt (7b') des vorderen Abschnitts (7') definiert:
- eine erste Öffnung (22), die dazu eingerichtet ist, den Durchgang einer Motorwelle (23) des Verbrennungsmotors (5) zu ermöglichen,
- eine zweite Öffnung (26), die dazu eingerichtet ist, den Durchgang einer Verbindungswelle (27), die wirkend mit einer aus der Mehrzahl von elektrischen Maschinen (M', M") verbunden ist, zu ermöglichen, und
- zumindest ein Paar von Lagersitzen (24), die jeweils mit einer Öffnung (25) versehen sind, die jeweils dazu eingerichtet ist, zumindest eine aus der Mehrzahl von elektrischen Maschinen (M', M") aufzunehmen.

2. Vordere Hybrid-Antriebsachse nach einem der vorhergehenden Ansprüche, wobei eines des zumindest einen Getriebes (12, 13) ein Zapfwellen-Getriebe (12) ist, das innerhalb eines aus dem ersten und dem zweiten Abschnitt (11,' 11") des geschlossenen Raums (11) eingehaust ist und das wirkend zwischen dem Verbrennungsmotor (5) und einer Zapfwellen-Welle (16) eingefügt ist.

3. Vordere Hybrid-Antriebsachse nach einem der vorhergehenden Ansprüche, wobei das Gehäuse (7) dazu eingerichtet ist, mit Radnaben (9) verbunden zu sein,
wobei eines aus dem zumindest einen Getriebe (12, 13) ein elektrisches Wege-Getriebe (13) ist, das innerhalb des ersten oder des zweiten Abschnitts (11', 11") des geschlossenen Raums (11) eingehaust ist und das dazu eingerichtet ist, zwischen dem Verbrennungsmotor (5) und den Radnaben (9) wirkend eingefügt zu sein.

4. Vordere Hybrid-Antriebsachse nach den Ansprüchen 2 und 3, wobei das Zapfwellengetriebe (12) von dem Zwischenabschnitt (7c') bezüglich des elektrischen Wege-Getriebes (13) unabhängig getragen ist.

5. Vordere Hybrid-Antriebachse nach einem der Ansprüche 2 bis 4, wobei das zumindest eine Getriebe (12, 13) eine Kupplungseinrichtung (31, 34) zum Trennen des zumindest einen Getriebes (12,13) von der Motorwelle (23) aufweist.

6. Vordere Hybrid-Antriebsachse nach einem der Ansprüche 2 bis 5, wobei das zumindest eine Getriebe (12, 13) zumindest zwei Reduktionsstufen (33', 33", 53', 53") und Kupplungseinrichtungen (34) zum Auswählen einer der zwei Reduktionsstufen (33', 33", 53', 53") aufweist, wobei die Reduktionsstufen (33', 33", 53', 53") dazu eingerichtet sind, das Drehmoment/die Geschwindigkeit zwischen den jeweiligen Eingangs- und Ausgangswellen zu variieren und zueinander unterschiedliche Übersetzungsverhältnisse bereitzustellen.

7. Vordere Hybrid-Antriebsachse nach einem der Ansprüche 3 bis 6, wobei das elektrische Wege-Getriebe (13) eine erste Mehrzahl von Zahnrädern, die eine erste elektrische Maschine (M') mit der Motorwelle (23) verbindet, und eine zweite Mehrzahl von Zahnrädern, die eine zweite elektrische Maschine (M") mit einer Verbindungswelle (27) verbindet, aufweist, wobei die erste und die zweite Mehrzahl von Zahnrädern unabhängig voneinander sind.

8. Vordere Hybrid-Antriebsachse nach Anspruch 7, wobei die Verbindungswelle (27) und die Motorwelle (23) kollinear entlang einer Vertikalachse (B) sind, die senkrecht zu der Längsachse (A) ist, und wobei die erste und die zweite elektrische Maschine (M', M") kollinear zu einer Querachse (C), die senkrecht zu der Vertikal- und der Längsachse (B, A) ist, sind.

9. Vordere Hybrid-Antriebsachse nach Anspruch 8, wobei das Zentrum jedes Zahnrads der ersten und der zweiten Mehrzahl von Zahnrädern zu gegenüberliegenden Quadranten in einer Kartesischen Ebene gehört, die von der Querachse (C) und der Vertikalachse (B) realisiert ist.

10. Vordere Hybrid-Antriebsachse nach Anspruch 4 und einem der Ansprüche 5 bis 9, wenn abhängig von Anspruch 4, wobei die Zapfwellen-Welle (16) einen inneren Abschnitt aufweist, der frei drehbar in einem Lagersitz (83) getragen ist, der in einer Welle (52) realisiert ist, die zumindest ein Zahnrad des elektrischen Wege-Getriebes (13) trägt.

11. Vordere Hybrid-Antriebsachse nach Anspruch 3, wobei das Zentrum der Zahnräder des elektrischen Wege-Getriebes (13) höchstens in einer ersten Ebene (P') und einer zweiten Ebene (P") enthalten ist, die voneinander in Bezug zu der Längsachse (A) und senkrecht zur letzteren beabstandet sind.

12. Vordere Hybrid-Antriebsachse nach Anspruch 2, wobei das Zentrum der Zahnräder des Zapfwellengetriebes (12) höchstens in einer dritten Ebene (R') und einer vierten Ebene (R") enthalten ist, die voneinander in Bezug zu der Längsachse (A) und senkrecht zur letzteren beabstandet sind.

13. Vordere Hybrid-Antriebsachse nach den Ansprüchen 11 und 12, wobei die erste Ebene (P'), die zweite Ebene (P"), die dritte Ebene (R') und die vierte Ebene (R") allesamt parallel zueinander sind.

14. Vordere Hybrid-Antriebsachse nach Anspruch 10, wenn abhängig von einem der Ansprüche 8 oder 9, wobei die Welle (52) kollinear zu der Motorwelle (23) und der Verbindungswelle (27) ist, wobei der Zwischenabschnitt (7C') entsprechende Öffnungen (80, 81, 82) definiert, die dazu eingerichtet sind, die Welle (52), die Motorwelle (23) und die Verbindungswelle (27) aufzunehmen.

15. Landwirtschaftliches Fahrzeug (1) mit einem Verbrennungsmotor (5), einem hinteren Getriebe (6), das von dem Verbrennungsmotor (5) getragen ist, einer hintere Getriebeachse (4), die wirkend mit dem Verbrennungsmotor (5) verbunden ist, und einer vorderen Antriebsachse (3) nach einem der vorhergehenden Ansprüche, die wirkend mit dem Verbrennungsmotor (5) und dem hinteren Getriebe (6) verbunden ist.

## Revendications

1. Essieu moteur hybride avant (3) pour un véhicule agricole (1), ledit essieu moteur hybride avant (3) comprenant :
un boîtier (7) configuré pour être fixé à un moteur à combustion interne (5) dudit véhicule agricole (1) ;
une pluralité de machines électriques (M', M") logées à l'intérieur dudit boîtier (7) ;
dans lequel ledit boîtier (7) comprend une partie avant (7') et une partie arrière (7") configurées pour être raccordées ensemble le long d'un axe longitudinal (A) dudit véhicule (1),
ladite partie avant (7') comprenant une partie terminale avant (7a') et une partie terminale arrière (7b') configurées pour être raccordées ensemble afin de définir un espace fermé (11) pour loger au moins une transmission (12, 13) comprenant chacune une pluralité d'engrenages et d'arbres logés dans l'espace (11), ladite au moins une transmission (12, 13) raccordant fonctionnellement au moins une de ladite pluralité de machines électriques (M', M") et un arbre moteur (23) dudit moteur à combustion interne (5),
ladite partie avant (7) comprenant en outre une partie intermédiaire (7c') interposée longitudinalement entre lesdites parties terminales avant et arrière (7a', 7b') et configurée pour diviser ledit espace fermé (11) en une première partie (11') et une seconde partie (11"),
ladite partie intermédiaire (7c') étant configurée pour soutenir ladite au moins une transmission (12, 13) à l'intérieur dudit espace fermé (11) ;
dans lequel la partie terminale arrière (7b') de ladite partie avant (7') définit :
• une première ouverture (22) configurée pour permettre le passage d'un arbre moteur (23) dudit moteur à combustion interne (5),
• une seconde ouverture (26) configurée pour permettre le passage d'un arbre de raccordement (27) qui est raccordé fonctionnellement à l'une parmi ladite pluralité de machines électriques (M', M"), et
• au moins une paire de sièges (24), qui sont chacun pourvus d'une ouverture (25) chacune configurée pour loger au moins une parmi ladite pluralité de machines électriques (M', M").

2. Essieu moteur hybride avant selon l'une quelconque desdites revendications précédentes, dans lequel l'une desdites au moins une transmission (12, 13) est une transmission de prise de force (12) logée dans l'une desdites première et seconde parties (11', 11") dudit espace fermé (11) et interposée fonctionnellement entre ledit moteur à combustion interne (5) et un arbre de prise de force (16).

3. Essieu moteur hybride avant selon l'une quelconque desdites revendications précédentes, dans lequel ledit boîtier (7) est configuré pour être raccordé à des moyeux de roue (9),
dans lequel l'une desdites au moins une transmission (12, 13) est une transmission par voie électrique (13) qui est logée dans l'une desdites première et seconde parties (11', 11") dudit espace fermé (11) et configurée pour être interposée fonctionnellement entre ledit moteur à combustion interne (5) et lesdits moyeux de roue (9).

4. Essieu hybride avant selon les revendications 2 et 3, dans lequel ladite transmission de prise de force (12) est portée par ladite partie intermédiaire (7c') indépendamment de ladite transmission par voie électrique (13).

5. Essieu hybride avant selon l'une quelconque des revendications 2 à 4, dans lequel ladite au moins une transmission (12, 13) comprend des moyens de couplage (31, 34) pour déconnecter ladite au moins une transmission (12, 13) dudit arbre moteur (23).

6. Essieu hybride avant selon l'une quelconque des revendications 2 à 5, dans lequel ladite au moins une transmission (12, 13) comprend au moins deux étages de réduction (33', 33", 53', 53") et des moyens de couplage (34) pour sélectionner l'un parmi lesdits deux étages de réduction (33', 33", 53', 53"), lesdits étages de réduction (33', 33", 53', 53") étant configurés pour faire varier le couple/la vitesse entre les arbres d'entrée et de sortie respectifs et ayant des rapports d'engrenage différents l'un par rapport à l'autre.

7. Essieu hybride avant selon l'une quelconque des revendications 3 à 6, dans lequel ladite transmission par voie électrique (13) comprend une première pluralité d'engrenages raccordant une première machine électrique (M') à l'arbre moteur (23) et une seconde pluralité d'engrenages raccordant une seconde machine électrique (M") à un arbre de raccordement (27), lesdites première et seconde pluralités d'engrenages étant indépendantes l'une de l'autre.

8. Essieu hybride avant selon la revendication 7, dans lequel ledit arbre de raccordement (27) et ledit arbre moteur (23) sont colinéaires selon un axe vertical (B) perpendiculaire audit axe longitudinal (A) et lesdites première et seconde machines électriques (M', M") sont colinéaires selon un axe transversal (C) perpendiculaire audit axe vertical et longitudinal (B, A).

9. Essieu hybride avant selon la revendication 8, dans lequel le centre de chaque engrenage de ladite première et de ladite seconde pluralité d'engrenages appartient à un quadrant opposé dans un plan cartésien réalisé par ledit axe transversal (C) et ledit axe vertical (B).

10. Essieu hybride avant selon la revendication 4 et l'une quelconque des revendications 5 à 9 lorsqu'elles dépendent de la revendication 4, dans lequel ledit arbre de prise de force (16) comprend une partie intérieure portée de manière libre en rotation sur un siège (83) réalisé dans un arbre (52) soutenant au moins un engrenage de ladite transmission par voie électrique (13).

11. Essieu hybride avant selon la revendication 3, dans lequel le centre des engrenages de ladite transmission par voie électrique (13) est contenu au maximum dans un premier plan (P') et un deuxième plan (P"), qui sont distants l'un de l'autre sur ledit axe longitudinal (A) et perpendiculaires à ce dernier.

12. Essieu hybride avant selon la revendication 2, dans lequel le centre des engrenages de ladite transmission de PDF (12) est contenu au maximum dans un troisième plan (R') et un quatrième plan (R"), qui sont distants l'un de l'autre sur ledit axe longitudinal (A) et perpendiculaires à ce dernier.

13. Essieu hybride avant selon la revendication 11 et la revendication 12, dans lequel ledit premier plan (P'), ledit deuxième plan (P"), ledit troisième plan (R') et ledit quatrième plan (R") sont tous parallèles les uns par rapport aux autres.

14. Essieu hybride avant selon la revendication 10, lorsqu'elle dépend des revendications 8 ou 9, dans lequel ledit arbre (52) est colinéaire audit arbre moteur (23) et audit arbre de raccordement (27), ladite partie intermédiaire (7c') définissant des ouvertures respectives (80, 81, 82) configurées pour loger ledit arbre (52), l'arbre moteur (23) et l'arbre de raccordement (27).

15. Véhicule agricole (1) comprenant un moteur à combustion interne (5), une transmission arrière (6) soutenue par ce moteur à combustion interne (5), un essieu de transmission arrière (4) raccordé fonctionnellement audit moteur à combustion interne (5) et un essieu moteur hybride avant (3) selon l'une quelconque des revendications précédentes raccordé fonctionnellement audit moteur à combustion interne (5) et à ladite transmission arrière (6).
